# EUROPEAN PATENT SPECIFICATION

(11) **EP 1 272 817 B1**
(45) Date of publication and mention of the grant of the patent: **24.02.2010**
(21) Application number: 00919788.0
(22) Date of filing: 28.03.2000
(51) Int. Cl.: G01D 5/38, G01D 5/347, G11B 7/09

(54) **ROTARY ENCODER**
DREHGEBER
CODEUR ROTATIF

(43) Date of publication of application: 08.01.2003
(73) Proprietor: Aim Controls, Inc., Penn Valley, CA 95946 (US)
(72) Inventor: Southam, Gordon R., Grass Valley, CA 95945 (US); Dwyer, Patrick H., Penn Valley, CA 95946 (US)
(74) Representative: Frost, Alex John
(86) International application number: PCT/US2000/008294
(87) International publication number: WO 2001/073379

(56) References cited:
- EP-A- 0 330 150
- EP-A- 0 679 870
- DE-A- 3 420 600
- US-A- 4 746 792
- US-A- 4 833 316
- US-A- 5 428 217
- US-A- 5 699 058
- US-A- 5 844 676

## Description

### BACKGROUND OF THE INVENTION

### 1. Field of the Invention

This invention pertains to the use of beams of laser light to measure the position, direction or velocity of a circular rotating device (such as a shaft) or of a linear motion device (such as an x, y table). The laser beams reflect off the encoded surface of a specially prepared disk or strip (similar to the commonly used polycarbonate disk with "pits" and "lands" used to encode audio, computer data, or video information) for the purpose of very high accuracy measurement of the position, velocity, and direction of a rotating or linear motion device to which the disk or strip is attached.

### 2. Description of the Background Art

There are a variety of devices that have been, and which are currently used, for measuring the rotational position and direction of a rotating body, or the position and direction of a linear device such as an x, y table. These include, without limitation, potentiometers, optical encoders based upon radial lines scribed on a disk, optical encoders based upon bar code technology, encoders based upon on a magnetic disk, and other devices. Most of these devices are of limited resolution or have other limitations such as very high cost or large size.

Presently, there are no devices that provide a high degree of accuracy, at a low cost, in a reasonably sized package. This invention satisfies the need for high resolution and low cost without sacrificing accuracy.

### BRIEF SUMMARY OF THE INVENTION

The present invention provides apparatuses and methods for measuring rotational or linear position, direction and velocity according to Claims 1, 8, 12 and 19.

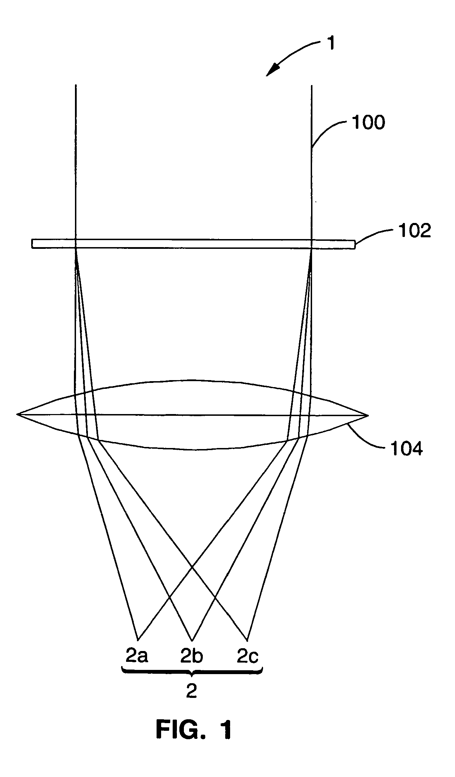

Embodiments of the present invention provide an apparatus and method for the precision measurement, in real time, of the position and direction of a rotating or linear moving body. Specifically, embodiments of the invention provide a specific pattern and technique for reading such pattern so as to determine not only the number of markings, but also the direction of movement as the markings pass through the focal points of a split laser beam. Although this invention is not limited to a single laser beam that is split into multiple beams by some means (e.g. a diffraction grating), it is possible that multiple laser beams and/or other means for laser beam splitting could be utilized in a similar manner to achieve comparable results. However, the most common and economically feasible type of laser beam system to use for this invention is the 3-beam type used in standard "CD" players (FIG. 1).

In conventional CD use, the three beams are used for two separate purposes. The center beam is used to read the information from the disk which is encoded in the form of a digital code impressed into the disk such that the laser light is alternately scattered away from, and reflected back, into the laser unit as each impressed mark, and unimpressed space, goes by. These impressions are generally referred to as "pits", and the unmarked space around them is generally referred to as a "land", or "lands". The side beams, or "satellite spots" as they are known, are used together to keep the main beam centered over the line of pits which encode the information. None of the encoded information is read by the satellite spots, only the average intensity of each reflected satellite beam is used: the average intensity increases if the laser is off-centered (relative to the centerline of a row of pits being read) towards a particular satellite beam, and decreases when the laser is off-centered toward the other satellite beam.

In contrast, embodiments of the invention utilize the amplified signal from all three beams and then digitise these before inputting them to a unique digital counting circuit. The need for the tracking function normally performed by the satellite beams is eliminated by the design of the information pattern, and all three beams are used to read in information about every pit and land that passes beneath them.

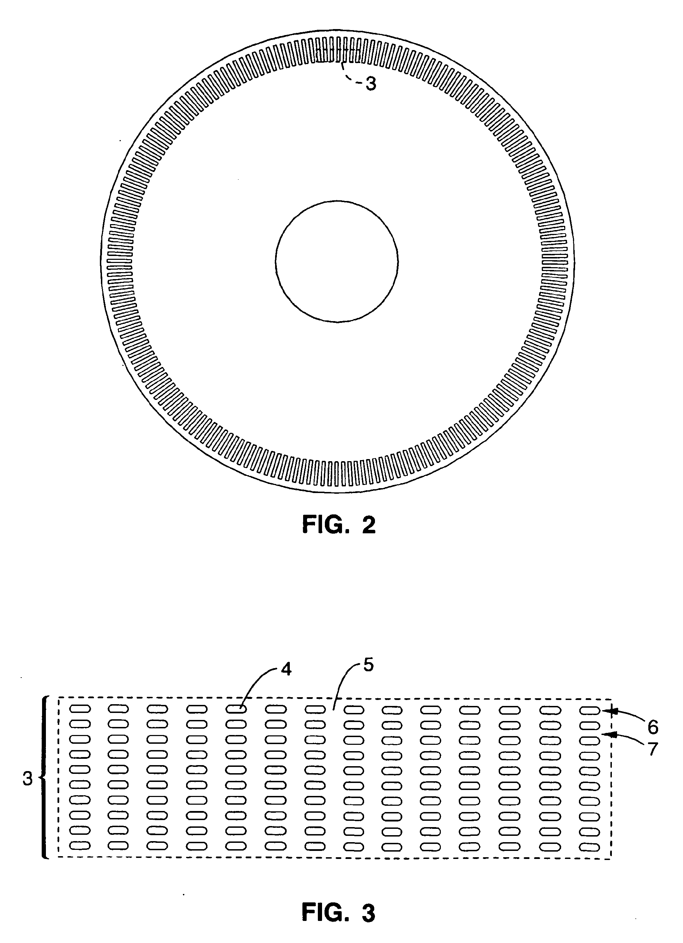

A method embodying the invention comprises, in general terms, the steps of providing a position measurement pattern 3 (FIG. 2) on a disk or strip encoded with "pits" 4 and "lands" 5 (FIG. 2), providing a suitably positioned position read head 1 (FIG. 1) with three lasers that produce laser beams 100 that pass through a diffraction grating through a diffraction 102 and a focus lens 104 to yield three focal spots 2(a), 2(b), 2(c) (FIG. 1) for reading the position measurement pattern 3, positioning or orienting the position read head 1 so that the relative spacing of the three laser focal spots 2 from the position read head 1 is a non-integral multiple of the spacing between the rows 6 (FIG. 2) of pits 4 and lands 5 of the position measurement pattern 3 such that the outputs from the reflected laser focus spots 2 are fully differentiated, communicating the outputs to converting means, and convertino the outputs to position count, direction and velocity information.

As a consequence, embodiments of the invention provide an apparatus and method for accurately measuring position, direction and velocity in a rotating or linear moving object. Further advantages of the invention will be brought out in the following portions of the specification, wherein the detailed description is for the purpose of fully disclosing preferred embodiments of the invention without placing limitations thereon.

### BRIEF DESCRIPTION OF THE DRAWINGS

The invention will be more fully understood by reference to the following drawings which are for illustrative purposes only:
FIG. 1 is a diagrammatic representation of a 3-beam laser system of a type commonly used in standard "CD" players.
FIG. 2 is a top plan view illustrating a disk carrying a rotational position measurement pattern in accordance with the invention (the same pattern, but laid cut in a straight line would be used in a linear position measurement pattern) ;
FIG. 3 is a top plan detail view illustrating the measurement pattern carried on the disk of FIG. 2.
FIG. 4 through FIG. 6 are top plan views illustrating high ,moderate and low densities, respectively, of the measurement pattern for either the rotational or linear embodiment.
FIG. 7 is a top plan view of a portion of the measurement pattern showing the relationship of the measurement pattern of pits and lands and the three laser spots from the position read head in what is referred to as the "N+fraction" relationship where N=2, illustrated on a single row of pits.
FIG. 8 is a top plan view of a portion of the measurement pattern showing the relationship of the measurement pattern and the three laser spots from the position read head in what is referred to as the "N+1/3" relationship where N=2 and the pits have moved with relation to the three laser spots from the position read head over one period in increments of 1/6^{th} of a period. The binary representation of the resulting output is also given.
FIG. 9 is a diagrammatic representation of the output signals of the position read head generated in response to a position measurement pattern at various fractional spacings in relationship to the "N+1/6" standard output of the three laser beams.
FIG. 10 through FIG. 12 is a combination of a diagrammatic representation of the output signals from the position read head and a top plan view of the corresponding position measurement pattern.
FIG. 13 and FIG. 14 are top plan views of the position measurement pattern without and with a synchronization mark added to said measurement pattern, respectively.
FIG. 15 is a diagrammatic representation of the output signals from the position read head when a synchronization mark is included in the position measurement pattern and the central laser spot passes over the synchronization mark.
FIG. 16A and 16B are diagrammatic representations of output signals from the position read head when a synchronization mark is included in the position measurement pattern and such synchronization marks under laser focal spots 2(a) and 2(b) are shortened (FIG. 16A) and lengthened (FIG. 16B).
FIG. 17A and 17B are diagrammatic representations of output signals from the position read head when a synchronization mark is included in the position measurement pattern and such synchronization mark under laser focal spot 2(b) is shortened and such synchronization mark under laser focal spot 2(c) is lengthened (FIG. 17A), and such synchronization mark under laser focal spot 2(b) is lengthened and such synchronization mark under laser focal spot 2(c) is shortened (FIG. 17B).
FIG. 18A and 18B are diagrammatic representations of output signals from the position read head when a synchronization mark is included in the position measurement pattern and such synchronization mark under laser focal spot 2(a) is shortened and such synchronization mark under laser focal spot 2(c) is lengthened (FIG. 18A), and such synchronization mark under laser focal spot 2(a) is lengthened and such synchronization mark under laser focal spot 2(c) is shortened (FIG. 18B).

### DETAILED DESCRIPTION OF THE INVENTION

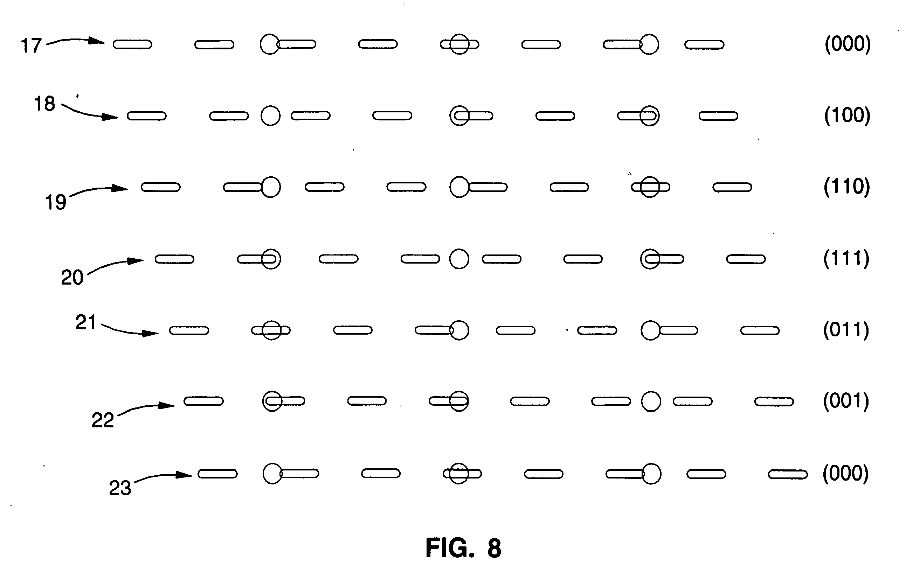

Referring more specifically to the drawings, for illustrative purposes the present invention is embodied in the apparatus generally shown in FIG. 1 through FIG. 18. It will be appreciated that the apparatus may vary as to configuration and as to details of the parts, and that the method may vary as to details and the order of the steps, without departing from the basic concepts as disclosed herein.

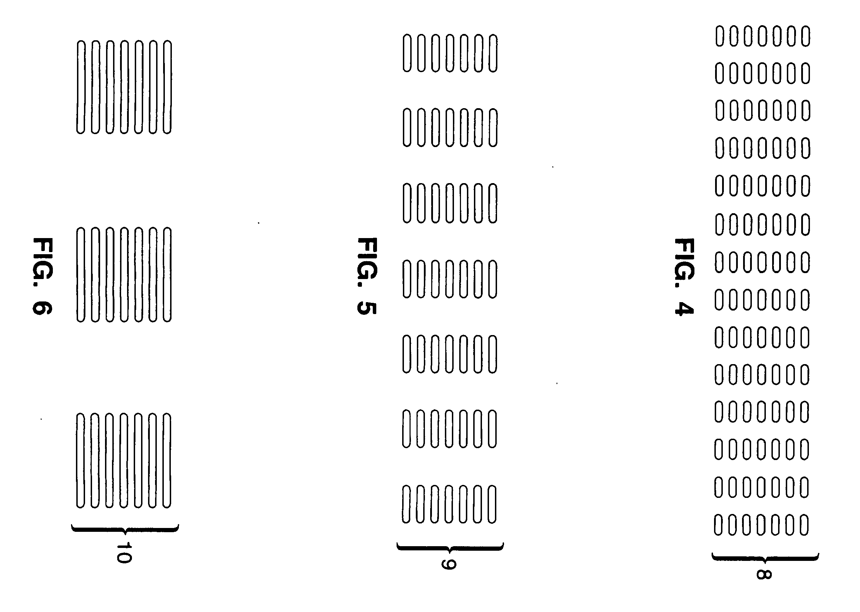

Referring to FIG. 2 and FIG. 3, the position measurement pattern 3 is generally shown. Referring to FIG. 4 through FIG. 6, more detailed examples are shown of the position measurement pattern 8, 9, and 10. A variety of materials (as described below) could be used to record the position measurement pattern 3. However, the preferred type of material is a standard molded polycarbonate disk or strip such as that commonly used for compact disks. In such a material, impressions in the reflective surface of the disk or strip which are as deep as 1/4th the wavelength of the laser light used to read the disk are called "pits" 4 (FIG. 3), and blank (or untouched) spaces in the reflective surface of the disk or strip are called "lands" 5 (FIG. 3). Additionally, there are re-useable types of material that use a construction whereby pits 4 are registered as areas of decreased reflectivity. Such material could also be utilized in the invention.

As illustrated in FIG. 3, the position measurement pattern 3 consists of "pit rows" 6, spaced apart by "clear rows" 7 at a distance equal to the length of a pit 4, and when aligned, forms stacks and clearings of pits 4. The width of clear rows 7 is a carefully chosen dimension which is less than would be used in music, video or data applications. By spacing the pit rows 6 closer together, it becomes impossible for the laser to determine the radial position of the laser focal spots 2. This is because the vertical line of pits 4 forms a diffraction grating which diffracts the reflected light away from the focus lens 104 shown in FIG. 1, regardless of the exact orientation of the grating within the three focal spots 2 shown in FIG. 1. By recording a sufficient number of rows 6, and ensuring that the three focal spots 2 are positioned within this band of rows 6, the need for any form of radial tracking is eliminated. Regardless of precise radial alignment within the band of rows 6, the laser focal spots 2 see only alternating sectors of light and dark. Note in FIG. 1 that the laser position read head, as a combined unit, is shown as element 1.

While FIG. 3 only shows ten rows 6 of pits 4 in the close-up view of lands 5 and pits 4, the band of pits 4 would, in practice, contain hundreds of spaced rows 6. Furthermore, a single disk or linear strip could contain several different bands of rows 6 of pits 4 corresponding to different device resolutions, different operating diameters, etc. Although the upper achievable limit of density for the position measurement pattern 3 is limited by the laser wavelength and the numerical aperture of the focus lens 1, lower densities can easily be achieved by lengthening the pits 4 and lands 5 without changing the pitch or width of each row 6 (see, e.g., FIG. 4 through FIG. 6 which shows high, moderate and low densities of position measurement pattern 3, respectively). Note that, in the case of a rotary version of the invention, this will result in fewer pits per row 6 at a given radius, and that the pit 4 length must be such that an integer number of pits fit seamlessly around the row 6. For maximum accuracy, the lands 5 between pits 4 must always at least equal the pit 4 length in a given row 6.

By adjusting the angle formed by the line of the direction of motion and the line between the center focal spot 2(c) and one or both of the satellite focal spots 2(a) and 2(b), it is possible to adjust the relative spacing of the focal spots 2 with the pits 4 beneath them. In the case of a rotary device, the pits 4, and the lands 5, are larger for rows 6 nearer the edge of the disk or strip and smaller for rows 6 nearer the center of the disk or strip. The spacing between the laser focal spots 2, however, is fixed for a given laser unit. Although there is variation in the spacing of the laser focal spots 2 in commercial "off the shelf' 3 beam laser assemblies due to manufacturing variations, this is not an important dimension for the usage described here.

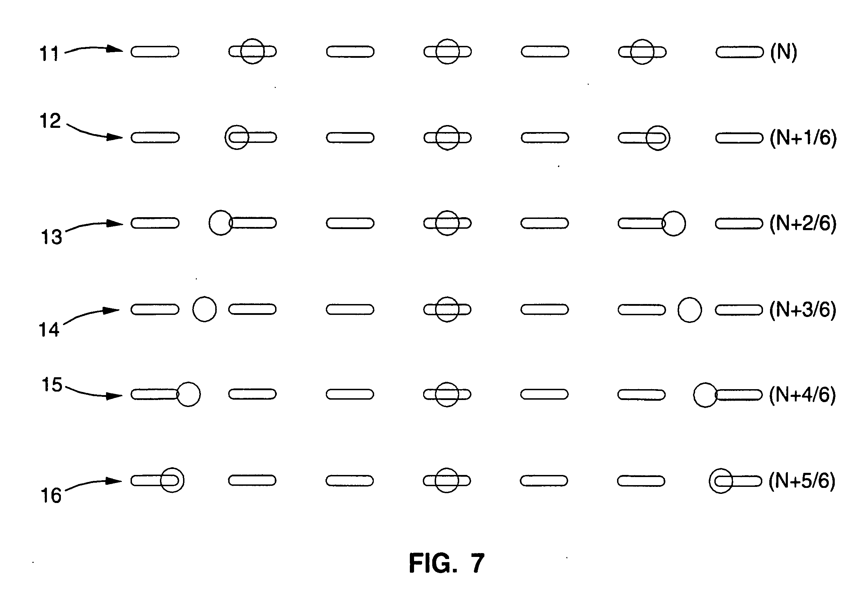

The "relative spacing" illustration described in FIG. 7 shows six different relative pit 4 spacing examples 11 through 16. These can be thought of as the same set of three focal spots 2 positioned over different rows 6 of pits 4 and presented at different magnifications, or as six different single laser focal spots over the same row. The point is, each of the six cases produces a different pattern of outputs.

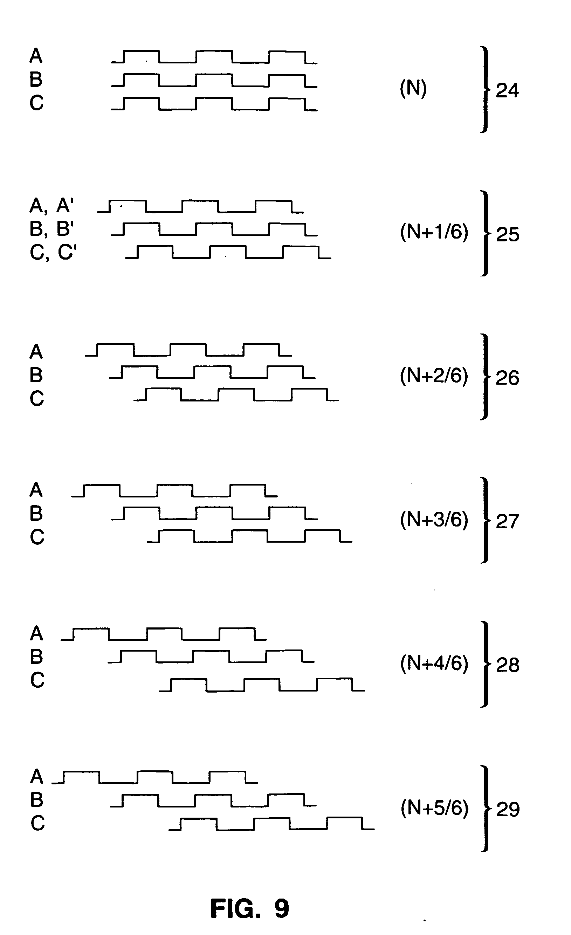

Referring to FIG. 7 and FIG. 9, in the case of N 11, where there is an integer multiple of pits 4 between each of the three focal spots 2, all three focal spots 2 see the same information at any given position. This is not particularly useful since the satellite focal spots 2(a) and 2(b) provide no additional information.

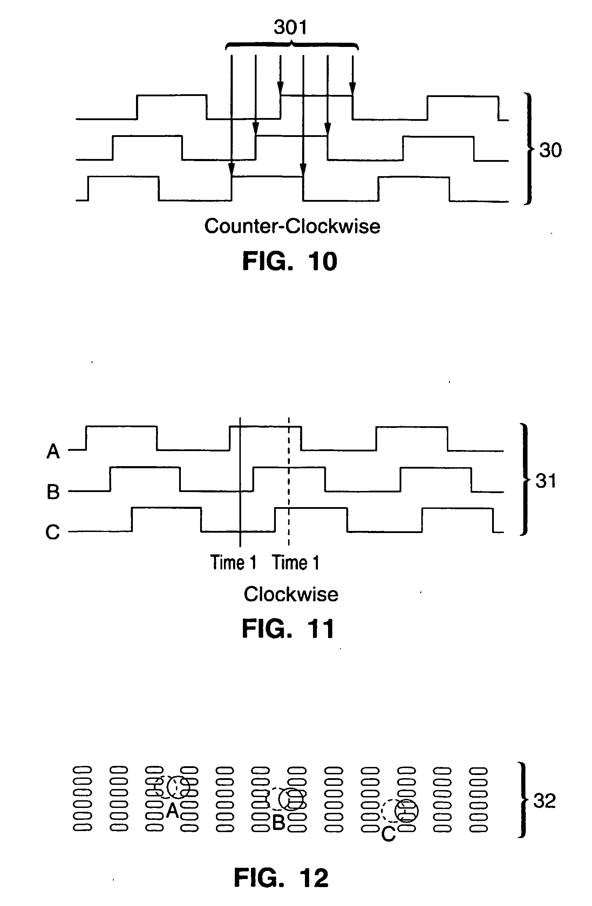

In the case of N+1/6 12, however, the focal spots 2 are fully differentiated; that is, each focal spot (2(a), 2(b), 2(c)) sees a different portion of the row 6 than the other two focal spots (2(a), 2(b), 2(c)) at any given instant, and therefore, three times as much information is received than from any single focal spot as in the case of N 11. By establishing a threshold point halfway between the maximum and minimum reflected brightness (just as is done to read a typical CD), the signals from the focal spots 2 can be converted to binary representations: a "1" for light, and "0" for dark as shown in FIG. 9, nos. 24-29. Note that output 24 is not useful; output 25 shows A'=A, B'=B and C'=C; output 26 shows A=inverted C, B'=B and C'=inverted A; output 27 is not useful; output 28 shows A'=inverted A, B'=B and C'=inverted C; and output 29 shows A'=C, B'=B and C'=A. As the other illustrations show in FIG. 7, FIG. 9 and FIG. 10 through FIG. 12, the result is a repeating pattern which gives not only movement, but also direction information. FIG. 10 shows six translations 301 per cycle; therefore, the resolution is six times the pit count. Note from FIG. 10 and FIG. 11 that direction is determined by sequence. Note also from FIG. 12 that, as the pattern proceeds clockwise, the laser spots appear to move counterclockwise. For example, as shown in timing diagram 31 in FIG. 11, in the case of "time 1", the output is 100. If the disk is moving clockwise, the next code will be 110, and then 111 at "time 2". If instead, the next code after time 1 were 000, then the disk must have moved counter-clockwise. As show in timing diagram 31 in FIG. 11, in the clockwise direction the pattern proceeds: 100, 110, 111, 011, 001, 000,100, ... As shown in timing diagram 30 in FIG. 10 in the counter-clockwise direction the pattern proceeds as follows: 100, 000, 001, 011, 111, 110, 100, ...

Referring to FIG. 7, in the case of N+2/6 13, fully differentiated information is also available, but the satellite signals are inverted and transposed.

Referring to FIG. 7, in the case of N+3/6 14, the satellite signals carry only the inverted information of the center focal spot 2(c), and therefore, like the case of N 11, are not useful.

Referring to FIG. 7, in the case of N+4/6 15, the data is fully differentiated like N+1/6 12, but the satellite focal spots 2(a) and 2(b) are inverted.

Referring to FIG. 7, in the case of N+5/6 16, the data is fully differentiated like N+1/6 12, but the satellite signals are transposed.

The case of N+6/6 is not illustrated in FIG. 7 because it is simply the same as N 11 where N is one integer larger.

In the case of fractions between these cases, the output pattern will be similar to whichever of the four useful cases in FIG. 7 that it is closest to, except that the time spent in each state will not be equal for a given rotational or linear speed, thus the duty cycle of the output waveforms will not be a symmetrical 50%, and thus accuracy could be correspondingly degraded.

It should be noted that the relative spacing between focal spots 2 can also be adjusted by other means such as changing the angle between the line of the focal spots 2 and the line of the rows 6 since the focal spots 2 do not have to be reading the same row 6.

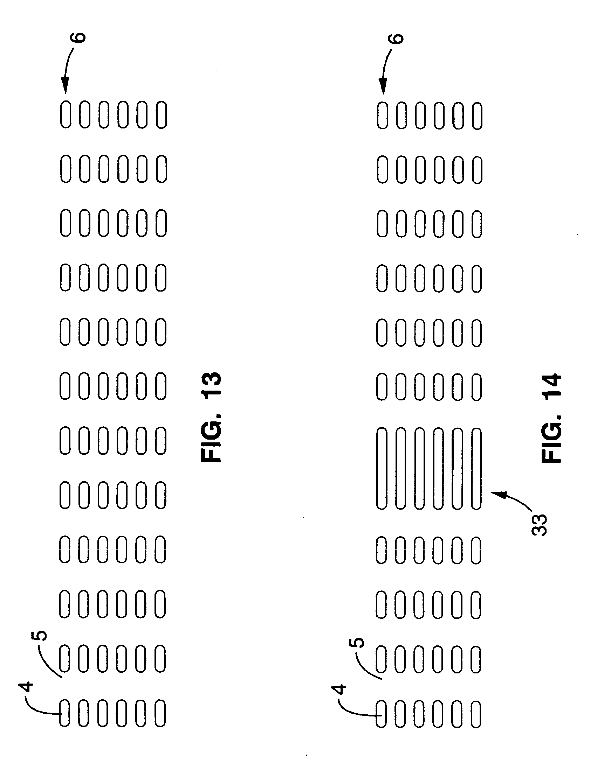

In many applications it is desirable to have a reference signal which marks one exact revolution. This signal is often known in the field as a "sync pulse" because it can be used to synchronize the exact angle of the encoder shaft or an exact "home" position on the linear strip. The subject invention incorporate such a sync pulse from the three beam laser apparatus with one modification to the position measurement pattern 3. Referring to FIG. 13 and FIG. 14, at one place on the row 6 of pits 4, and at all corresponding places on all other rows 6, the land 5 between two pits 4 is overwritten to join the two pits 4 into one long pit (hereinafter "sync pulse 33") which is three times the length of all other pits 4 on that row 6.

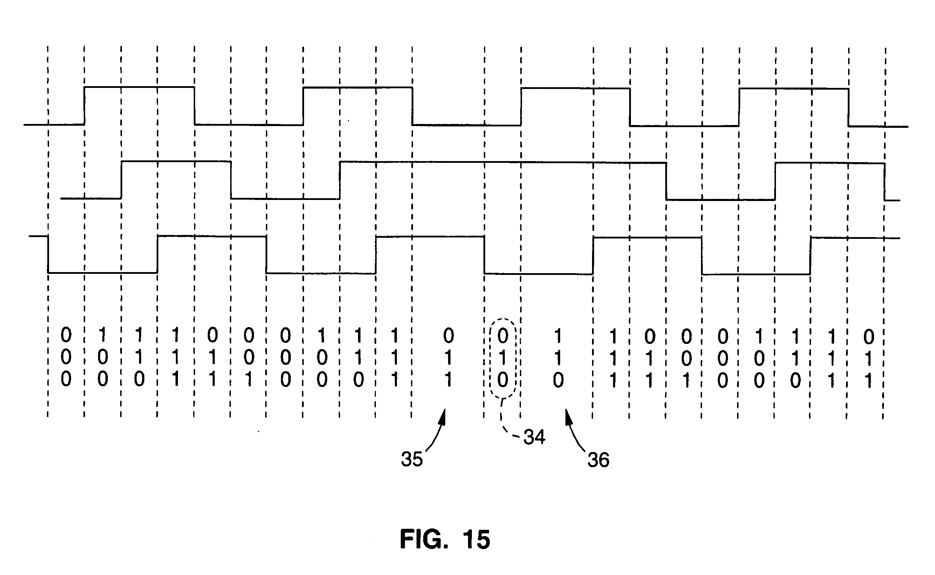

It may also be observed in the preceding discussion of the focal spots 2 from the laser beam apparatus adjusted to a relative spacing of N+1/6 12, the outputs 101, and 010 never occur. Referring to FIG. 15, adding the above described sync pulse 33 modification creates situations where the output 34 (0110) occurs exactly once per revolution or traverse of a linear strip. This output state is the derived sync pulse 33, and can be used to identify that exact point of one revolution (within the resolution of the pattern). This method for generating sync pulse 33 has other ramifications. In addition to the 010 output obtained each time the sync pulse 33 passes under the center spot, the output 101 is generated each time the long pit passes under each of the satellite focal spots 2(a) and 2(b). One way to avoid this in a rotary measuring device is to angle the line of the focal spots 2 so that one of the satellite focal spots (either 2(a) or 2(b)) reads closer to the center of the disk (or strip) and the other satellite focal spot reads further from the center of the disk (or strip) than the center focal spot 2(c). The sync pulse 33 would then be placed in the pattern only for those rows 6 which will be read by the center focal spot 2(c), and not read by the satellite focal spots 2(a) or 2(b). This way, the output 101 never occurs. If this technique is used, then the overall band of rows 6 must be made wide enough to accommodate a range of angles sufficient to adjust the relative spacing of the focal spots 2 to one of the useful cases as shown, for example, in N+1/6 12 and N+4/6 15 in FIG. 7, without adjusting the position of the center focal spot 2(c) (which must be at the center of the subregion of the row 6 which contains the sync pulse 33). To utilize this technique, eccentricity (or linear drift) must be sufficiently controlled to always allow the center focal spot 2(c) to remain over the position measurement pattern 3 containing the sync pulse 33.

The other main ramification of introducing the sync pulse 33 into the position measurement pattern 3 is that the two logic states on either side of the sync pulse 33 are twice the normal length (see FIG. 15, elements 35 and 36). This requires that the positional count be adjusted when these states occur, and results in degraded resolution over this small interval (2 nominal logic states) on each side of the sync pulse 33. If the 101 outputs are not eliminated as described above, an analogous situation will occur adjacent to each of the 101 output states.

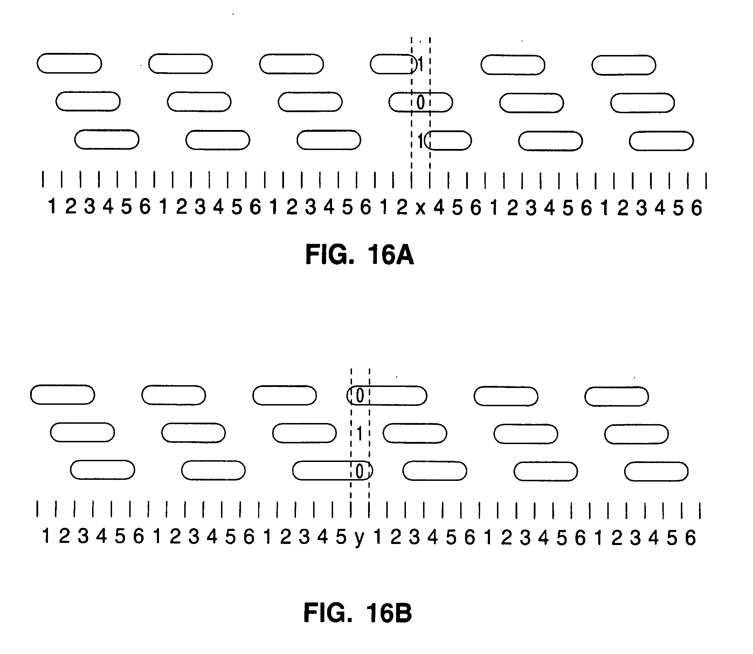

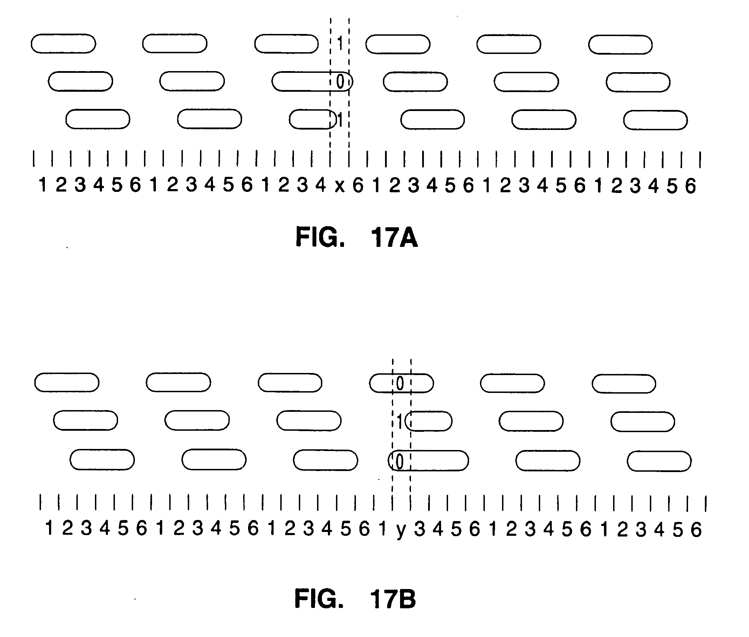

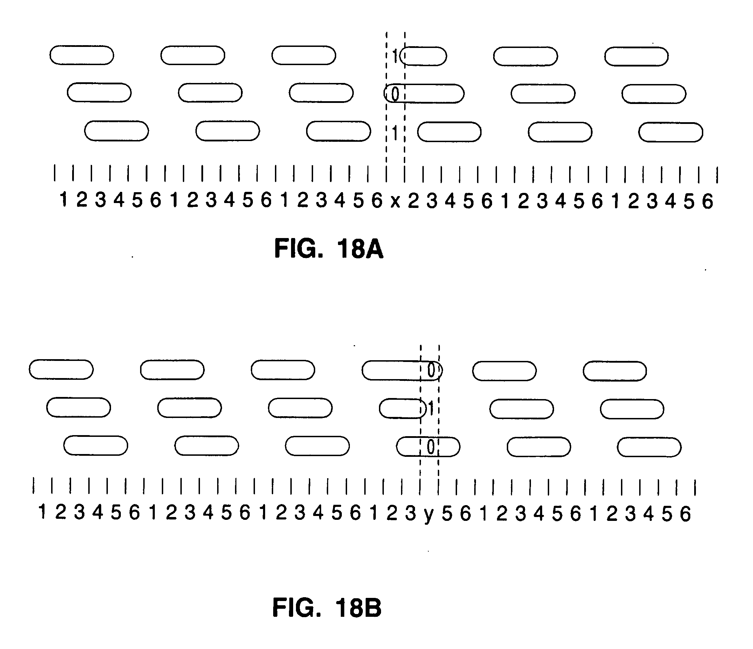

As discussed above, one of the principle problems with the sync pulse 33 addition to the position measurement pattern 3 is that at two points adjacent to the sync pulse 33, there are missing bits of resolution. Although these can be counted back into the count on a sync pulse 33 crossing to keep the count accurate, the point inaccuracy of one bit on each side remains. For cases where the resolution limit of the disk or strip is not a limitation, there is another marking scheme which does not suffer this problem:
To use this method, the angle between the line of the focal spots 2 and the pits 4 must be large enough, and the maximum eccentricity (or linear drift error) small enough such that the three focal spots 2 are reliably reading three different groups or patterns of pit 4 rows of the position measurement pattern 3 on the disk or strip. The sync pulse 33 is then encoded not on the row 6 under the center focal spot 2(c), but as a combination of pattern changes on the rows 6 under two of the three focal spots 2. As can be seen in FIG. 16 thorough FIG. 18, there are six possible permutations of this marking scheme. These six permutations arise from the two possible marking outputs (101 denoted "x" in the drawing figures" and 010 denoted "y"), and the three possible combinations of beam pairs used. FIG. 16 illustrates the use of focal spots 2(a) and 2(b), FIG. 17 illustrates the use of focal spots 2(c) and 2(b), and FIG. 18 illustrates the use of focal spots 2(a) and 2(c).

As can be seen, these patterns achieve a sync pulse 33 like counting anomaly by transposing the edges that would normally define the bit space where the "x" or "y" count occurs. However, because the two edges are transposed, there is still only one edge transition per bit, and there is indeed one transition for every bit, and thus full counting accuracy and resolution is maintained at every point on the disk or strip.

Once the outputs are configured (as previously discussed, e.g., FIG. 9) as N+1/6 type signals, converting them to a count and direction signal for input into a high-speed bi-directional counter involves the use of a digital state machine which looks for changes in the output state, and based upon the rules of the position measurement pattern 3 predicts what should come next in a clockwise or counter-clockwise direction (or if a valid synch state could be next, its state). When a change of state occurs, the state machine compares the new state to its last predictions, sets the direction signal accordingly, and outputs a count pulse. If the new state is a valid 010, or 101 and sync pulse 33 as discussed in the first example above is being used, an extra count pulse is issued upon entering and upon leaving the state to compensate for the adjacent wide states as noted above.

Although the description above contains many specificities, these should not be construed as limiting the scope of the invention but as merely providing illustrations of some of the presently preferred embodiments of this invention.

## Claims

1. An apparatus for measuring rotational position, direction and velocity, comprising:
(a) an optical disk, said disk having a rotational axis;
(b) a position measurement pattern (3), said position measurement pattern included on said optical disk, said position measurement pattern including a plurality of spaced apart rows of lands (5) and pits (4); and
(c) a position read head (1), said read head located adjacent to said optical disk, said position read head for directing a plurality of laser beams (100) towards said position measurement pattern, said position read head including receiver means for detection of laser light reflected by said position measurement pattern, said receiver means producing output signals responsive to said detected laser light.

2. An apparatus as recited in Claim 1, wherein:
(a) said plurality of lands and pits produce different output patterns depending upon the direction of rotation; and
(b) said receiver means produces output signals correlated in both direction and position to said detected laser light.

3. An apparatus as recited in Claim 2, wherein said position read head comprises:
(a) means for producing three spaced apart laser beams, said laser beams being spaced in a relationship that correlates mathematically to the position measurement pattern; and
(b) means for adjusting the relative spacing of said laser beams with respect to the spacing of said lands and pits of said position measurement pattern.

4. An apparatus as recited in claim 3, wherein said spacing of said laser beams is equal to a non-integral multiple of the spacing between said lands and pits of said position measurement pattern.

5. An apparatus as recited in claim 2, further comprising means for converting said output signals from said position read head into count and direction signals.

6. An apparatus as recited in claim 2, wherein said pits and lands have widths which are below the diffraction limit of the light of said laser beams.

7. An apparatus as recited in claim 1, wherein said plurality of rows of lands and pits are spaced apart at a distance less than the diffraction limit of the light of said laser beams.

8. A method for measuring rotational position, direction and velocity comprising the steps of:
(a) providing a position measurement pattern (3) on an optical disk, said position measurement pattern including a plurality of spaced apart rows of lands (5) and pits (4);
(b) providing a position read head (1), said position read head for directing a plurality of laser beams (100) towards said position measurement pattern, said position read head including receiver means for detecting laser light reflected by said position measurement pattern;
(c) producing output signals by said receiver means, said output signals responsive to said detected laser light.

9. A method as recited in claim 8, wherein the plurality of laser beams are spaced apart in a relationship that correlates mathematically to the position measurement pattern.

10. A method as recited in claim 9, further comprising adjusting the relative spacing between said laser beams along the axis of motion of said position measurement pattern such that said spacing is equal to a non-integral multiple of the spacing of lands and pits.

11. A method as recited in claim 10, further comprising the step of converting said output signals to count and direction information.

12. An apparatus for measuring linear position, direction and velocity comprising:
(a) an optical strip;
(b) a position measurement pattern (3), said position measurement pattern included on said optical strip, said position measurement pattern including a plurality of spaced apart rows of lands (5) and pits (4); and
(c) a position read head (1), said read head located adjacent to said optical strip, said position read head for directing a plurality of laser beams (100) towards said position measurement pattern, said position read head including receiver means for detection of laser light reflected by said position measurement pattern, said receiver means producing output signals responsive to said detected laser light.

13. An apparatus as recited in claim 12, wherein:
(a) said plurality of lands and pits produce different output patterns depending upon the direction of motion; and
(b) said receiver means produces output signals correlated in both direction and position to said detected laser light.

14. An apparatus as recited in claim 13, wherein said position read head comprises:
(a) means for producing three spaced apart laser beams, said laser beams being spaced in a relationship that correlates mathematically to the position measurement pattern; and
(b) means for adjusting the relative spacing of said laser beams with respect to the spacing of said lands and pits of said position measurement pattern.

15. An apparatus as recited in claim 14, wherein said spacing of said laser beams is equal to a non-integral multiple of the spacing between said lands and pits of said position measurement pattern.

16. An apparatus as recited in claim 13, further comprising means for converting said output signals from said position read head into count, direction and velocity signals.

17. An apparatus as recited in claim 13, wherein said pits and lands have widths which are below the diffraction limit of the light of said laser beams.

18. An apparatus as recited in claim 12, wherein said plurality of rows of lands and pits are spaced apart at a distance less than the diffraction limit of the light of said laser beams.

19. A method for measuring linear position, direction and velocity comprising the steps of:
(a) providing a position measurement pattern (3) on an optical strip, said position measurement pattern including a plurality of spaced apart rows of lands (5) and pits (4);
(b) providing a position read head (1), said position read head directing a plurality of laser beams (100) towards said position measurement pattern, said position read head including receiver means for detecting laser light reflected by said position measurement pattern; and
(c) producing output signals by said receiver means, said output signals responsive to said detected laser light.

20. A method as recited in claim 19, wherein said plurality of laser beams are spaced apart in a relationship that correlates mathematically to the position measurement pattern.

21. A method as recited in claim 20, further comprising adjusting the relative spacing between said laser beams along the axis of motion of said position measurement pattern such that said spacing is equal to a non-integral multiple of the spacing of lands and pits.

22. A method as recited in claim 21, further comprising the step of converting said output signals to count and direction information.

## Patentansprüche

1. Vorrichtung zum Messen von Drehposition, -richtung und -geschwindigkeit, umfassend:
(a) eine optische Scheibe, wobei die Scheibe eine Drehachse aufweist;
(b) ein Positionsmessmuster (3), wobei das Positionsmessmuster in der optischen Schiebe enthalten ist, wobei das Positionsmessmuster eine Mehrzahl von mit Abstand angeordneten Reihen von Böden (5) und Gruben (4) enthält; und
(c) einen Positionslesekopf (1), wobei der Lesekopf der optischen Scheibe benachbart angeordnet ist, wobei der Positionslesekopf ausgebildet ist, um eine Mehrzahl von Laserstrahlen (100) zu dem Positionsmessmuster zu lenken, wobei der Positionslesekopf ein Empfängermittel zum Erfassen des von dem Positionsmessmuster reflektierten Laserlichts enthält, wobei das Empfängermittel Ausgangssignale erzeugt, die auf das erfasste Laserlicht ansprechen.

2. Vorrichtung nach Anspruch 1, worin:
(a) die Mehrzahl von Böden und Gruben in Abhängigkeit von der Drehrichtung unterschiedliche Ausgangsmuster erzeugen; und
(b) das Empfängermittel Ausgangssignale erzeugt, die sowohl in Richtung als auch Position zu dem erfassten Laserlicht korreliert sind.

3. Vorrichtung nach Anspruch 2, worin der Positionslesekopf umfasst:
(a) ein Mittel zum Erzeugen von drei mit Abstand angeordneten Laserstrahlen, wobei die Laserstrahlen in einer Beziehung mit Abstand angeordnet sind, die mathematisch zu dem Positionsmessmuster korreliert; und
(b) ein Mittel zum Einstellen des relativen Abstands der Laserstrahlen in Bezug auf den Abstand der Böden und Gruben des Positionsmessmusters.

4. Vorrichtung nach Anspruch 3, worin der Abstand der Laserstrahlen gleich einem nicht ganzzahligen Vielfachen des Abstands zwischen den Böden und Gruben des Positionsmessmusters ist.

5. Vorrichtung nach Anspruch 2, die ferner ein Mittel zum Umwandeln der Ausgangssignale von dem Positionslesekopf in Zähl- und Richtungssignale aufweist.

6. Vorrichtung nach Anspruch 2, worin die Gruben und Böden Breiten haben, die unterhalb der Beugungsgrenze des Lichts der Laserstrahlen sind.

7. Vorrichtung nach Anspruch 1, worin die Mehrzahl von Reihen von Böden und Gruben mit einem Abstand voneinander angeordnet sind, der kleiner ist als die Beugungsgrenze des Lichts der Laserstrahlen.

8. Verfahren zum Messen von Drehposition, -richtung und -geschwindigkeit, welches die Schritte umfasst:
(a) Bereitstellen eines Positionsmessmusters (3) auf einer optischen Scheibe, wobei das Positionsmessmuster eine Mehrzahl von mit Abstand angeordneten Reihen von Böden (5) und Gruben (4) enthält;
(b) Bereitstellen eines Positionslesekopfs (1), wobei der Positionslesekopf ausgebildet ist, um eine Mehrzahl von Laserstrahlen (100) zu dem Positionsmessmuster zu lenken, wobei der Positionslesekopf ein Empfängermittel zum Erfassen des von dem Positionsmessmuster reflektierten Laserlichts enthält;
(c) Erzeugen von Ausgangssignalen durch das Empfängermittel, wobei die Ausgangssignale auf das erfasste Laserlicht ansprechen.

9. Verfahren nach Anspruch 8, worin die Mehrzahl von Laserstrahlen in einer Beziehung mit Abstand angeordnet sind, die mit dem Positionsmessmuster mathematisch korreliert.

10. Verfahren nach Anspruch 9, das ferner umfasst, den relativen Abstand zwischen den Laserstrahlen entlang der Bewegungsachse des Positionsmusters derart einzustellen, dass der Abstand gleich einem nicht ganzzahligen Vielfachen des Abstands der Böden und Gruben ist.

11. Verfahren nach Anspruch 10, das ferner den Schritt umfasst, die Ausgangssignale in Zähl- und Richtungsinformation umzuwandeln.

12. Vorrichtung zum Messen von linearer Position, Richtung und Geschwindigkeit, umfassend:
(a) einen optischen Streifen
(b) ein Positionsmessmuster (3), wobei das Positionsmessmuster auf dem optischen Streifen enthalten ist, wobei das Positionsmessmuster eine Mehrzahl von mit Abstand angeordneten Reihen von Böden (5) und Gruben (4) enthält;
(c) einen Positionslesekopf (1), wobei der Lesekopf dem optischen Streifen benachbart angeordnet ist, wobei der Positionslesekopf ausgebildet ist, um eine Mehrzahl von Laserstrahlen zu dem Positionsmessmuster zu lenken, wobei der Positionslesekopf ein Empfängermittel zum Erfassen des von dem Positionsmessmuster reflektierten Laserstrahls enthält, wobei das Empfängermittel Ausgangssignale erzeugt, die auf das erfasste Laserlicht ansprechen.

13. Vorrichtung nach Anspruch 12, worin
(a) die Mehrzahl von Böden und Gruben in Abhängigkeit von der Bewegungsrichtung unterschiedliche Ausgangsmuster erzeugen; und
(b) das Empfängermittel Ausgangssignale erzeugt, die sowohl in Richtung als auch Position zu dem erfassten Laserlicht korreliert sind.

14. Vorrichtung nach Anspruch 13, worin der Positionslesekopf umfasst:
(a) ein Mittel zum Erzeugen von drei mit Abstand angeordneten Laserstrahlen, wobei die Laserstrahlen in einer Beziehung mit Abstand angeordnet sind, die mathematisch zu dem Positionsmessmuster korreliert; und
(b) ein Mittel zum Einstellen des relativen Abstands der Laserstrahlen in Bezug auf den Abstand der Böden und Gruben des Positionsmessmusters.

15. Vorrichtung nach Anspruch 14, worin der Abstand der Laserstrahlen gleich einem nicht ganzzahligen Vielfachen des Abstands zwischen den Böden und Gruben des Positionsmessmusters ist.

16. Vorrichtung nach Anspruch 13, die ferner ein Mittel zum Umwandeln der Ausgangssignale von dem Positionslesekopf in Zähl-, Richtungs- und Geschwindigkeitssignale aufweist.

17. Vorrichtung nach Anspruch 13, worin die Gruben und Böden Breiten haben, die unterhalb der Beugungsgrenze des Lichts der Laserstrahlen sind.

18. Vorrichtung nach Anspruch 12, worin die Mehrzahl von Reihen von Böden und Gruben mit einem Abstand voneinander angeordnet sind, der kleiner ist als die Beugungsgrenze des Lichts der Laserstrahlen.

19. Verfahren zum Messen von linearer Position, Richtung und Geschwindigkeit, welches die Schritte umfasst:
(a) Bereitstellen eines Positionsmessmusters (13) auf einem optischen Streifen, wobei das Positionsmessmuster eine Mehrzahl von mit Abstand angeordneten Reihen von Böden (5) und Gruben (4) enthält;
(b) Bereitstellen eines Positionslesekopfs (1), wobei der Positionslesekopf eine Mehrzahl von Laserstrahlen (100) zu dem Positionsmessmuster lenkt, wobei der Positionslesekopf ein Empfängermittel zum Erfassen des von dem Positionsmessmuster reflektierten Laserlichts enthält; und
(c) Erzeugen von Ausgangssignalen durch das Empfängermittel, wobei die Ausgangssignale auf das erfasste Laserlicht ansprechen.

20. Verfahren nach Anspruch 19, worin die Mehrzahl von Laserstrahlen in einer Beziehung mit Abstand angeordnet sind, die mit dem Positionsmessmuster mathematisch korreliert.

21. Verfahren nach Anspruch 20, das ferner umfasst, den relativen Abstand zwischen den Laserstrahlen entlang der Bewegungsachse des Positionsmusters derart einzustellen, dass der Abstand gleich einem nicht ganzzahligen Vielfachen des Abstands der Böden und Gruben ist.

22. Verfahren nach Anspruch 21, das ferner den Schritt umfasst, die Ausgangssignale in Zähl- und Richtungsinformation umzuwandeln.

## Revendications

1. Appareil destiné à mesurer une position, une direction et une vitesse de rotation, comprenant :
(a) un disque optique, ledit disque ayant un axe de rotation ;
(b) un motif de mesure de position (3), ledit motif de mesure de position étant inclus sur ledit disque optique, ledit motif de mesure de position comportant une pluralité de rangées mutuellement espacées de méplats (5) et de cuvettes (4) ; et
(c) une tête de lecture de position (1), ladite tête de lecture étant située à proximité immédiate dudit disque optique, ladite tête de lecture de position étant destinée à diriger une pluralité de faisceaux laser (100) vers ledit motif de mesure de position, ladite tête de lecture de position comportant un moyen récepteur destiné à détecter la lumière laser réfléchie par ledit motif de mesure de position, ledit moyen récepteur produisant des signaux de sortie en réponse à ladite lumière laser détectée.

2. Appareil selon la revendication 1, dans lequel :
(a) ladite pluralité de méplats et de cuvettes produit des motifs de sortie différents en fonction de la direction de rotation ; et
(b) ledit moyen récepteur produit des signaux de sortie corrélés à la fois en direction et en position avec ladite lumière laser détectée.

3. Appareil selon la revendication 2, dans lequel ladite tête de lecture de position comprend :
(a) un moyen destiné à produire trois faisceaux laser mutuellement espacés, lesdits faisceaux laser étant espacés selon une relation qui est mathématiquement corrélée avec le motif de mesure de position ; et
(b) un moyen destiné à ajuster l'espacement relatif desdits faisceaux laser par rapport à l'espacement desdits méplats et desdites cuvettes dudit motif de mesure de position.

4. Appareil selon la revendication 3, dans lequel ledit espacement desdits faisceaux laser est égal à un multiple non entier de l'espacement entre lesdits méplats et lesdites cuvettes dudit motif de mesure de position.

5. Appareil selon la revendication 2, comprenant en outre un moyen destiné à convertir lesdits signaux de sortie provenant de ladite tête de lecture de position en des signaux de comptage et de direction.

6. Appareil selon la revendication 2, dans lequel lesdites cuvettes et lesdits méplats ont des largeurs qui sont inférieures à la limite de diffraction de la lumière desdits faisceaux laser.

7. Appareil selon la revendication 1, dans lequel lesdites plusieurs rangées de méplats et de cuvettes sont mutuellement espacées d'une distance inférieure à la limite de diffraction de la lumière desdits faisceaux laser.

8. Procédé destiné à mesurer une position, une direction et une vitesse de rotation, comprenant les étapes consistant à :
(a) prévoir un motif de mesure de position (3) sur un disque optique, ledit motif de mesure de position comportant une pluralité de rangées mutuellement espacées de méplats (5) et de cuvettes (4) ;
(b) prévoir une tête de lecture de position (1), ladite tête de lecture de position étant destinée à diriger une pluralité de faisceaux laser (100) vers ledit motif de mesure de position, ladite tête de lecture de position comportant un moyen récepteur destiné à détecter la lumière laser réfléchie par ledit motif de mesure de position ;
(c) produire des signaux de sortie à partir dudit moyen récepteur, lesdits signaux de sortie étant en réponse à ladite lumière laser détectée.

9. Procédé selon la revendication 8, dans lequel la pluralité de faisceaux laser sont mutuellement espacés selon une relation qui est mathématiquement corrélée avec le motif de mesure de position.

10. Procédé selon la revendication 9, comprenant en outre un ajustement de l'espacement relatif entre lesdits faisceaux laser suivant l'axe de mouvement dudit motif de mesure de position de façon que ledit espacement soit égal à un multiple non entier de l'espacement des méplats et des cuvettes.

11. Procédé selon la revendication 10, comprenant en outre l'étape consistant à convertir lesdits signaux de sortie en des informations de comptage et de direction.

12. Appareil destiné à mesurer une position, une direction et une vitesse linéaires, comprenant :
(a) un ruban optique ;
(b) un motif de mesure de position (3), ledit motif de mesure de position étant présent sur ledit ruban optique, ledit motif de mesure de position comportant une pluralité de rangées mutuellement espacées de méplats (5) et de cuvettes (4) ; et
(c) une tête de lecture de position (1), ladite tête de lecture étant située à proximité immédiate dudit ruban optique, ladite tête de lecture de position étant destinée à diriger une pluralité de faisceaux laser (100) vers ledit motif de mesure de position, ladite tête de lecture de position comportant un moyen récepteur destiné à détecter la lumière laser réfléchie par ledit motif de mesure de position, ledit moyen récepteur produisant des signaux de sortie en réponse à ladite lumière laser détectée.

13. Appareil selon la revendication 12, dans lequel :
(a) ladite pluralité de méplats et de cuvettes produit des motifs de sortie différents en fonction de la direction de mouvement ; et
(b) ledit moyen récepteur produit des signaux de sortie corrélés à la fois en direction et en position avec ladite lumière laser détectée.

14. Appareil selon la revendication 13, dans lequel ladite tête de lecture de position comprend :
(a) un moyen destiné à produire trois faisceaux laser mutuellement espacés, lesdits faisceaux laser étant espacés selon une relation qui est mathématiquement corrélée avec le motif de mesure de position ; et
(b) un moyen destiné à ajuster l'espacement relatif desdits faisceaux laser par rapport à l'espacement desdits méplats et desdites cuvettes dudit motif de mesure de position.

15. Appareil selon la revendication 14, dans lequel ledit espacement desdits faisceaux laser est égal à un multiple non entier de l'espacement entre lesdits méplats et lesdites cuvettes dudit motif de mesure de position.

16. Appareil selon la revendication 13, comprenant en outre un moyen destiné à convertir lesdits signaux de sortie provenant de ladite tête de lecture de position en des signaux de comptage, de direction et de vitesse.

17. Appareil selon la revendication 13, dans lequel lesdites cuvettes et lesdits méplats ont des largeurs qui sont inférieures à la limite de diffraction de la lumière desdits faisceaux laser.

18. Appareil selon la revendication 12, dans lequel lesdites plusieurs rangées de méplats et de cuvettes sont mutuellement espacées d'une distance inférieure à la limite de diffraction de la lumière desdits faisceaux laser.

19. Procédé destiné à mesurer une position, une direction et une vitesse linéaires, comprenant les étapes consistant à :
(a) prévoir un motif de mesure de position (3) sur un ruban optique, ledit motif de mesure de position comportant une pluralité de rangées mutuellement espacées de méplats (5) et de cuvettes (4) ;
(b) prévoir une tête de lecture de position (1), ladite tête de lecture de position dirigeant une pluralité de faisceaux laser (100) vers ledit motif de mesure de position, ladite tête de lecture de position comportant un moyen récepteur destiné à détecter la lumière laser réfléchie par ledit motif de mesure de position ; et
(c) produire des signaux de sortie à partir dudit moyen récepteur, lesdits signaux de sortie étant en réponse à ladite lumière laser détectée.

20. Procédé selon la revendication 19, dans lequel les plusieurs faisceaux laser sont mutuellement espacés selon une relation qui est mathématiquement corrélée avec le motif de mesure de position.

21. Procédé selon la revendication 20, consistant en outre à ajuster l'espacement relatif entre lesdits faisceaux laser le long de l'axe de mouvement dudit motif de mesure de position de façon que ledit espacement soit égal à un multiple non entier de l'espacement des méplats et des cuvettes.

22. Procédé selon la revendication 21, comprenant en outre l'étape consistant à convertir lesdits signaux de sortie en des informations de comptage et de direction.
